# EUROPÄISCHE PATENTSCHRIFT

(11) **EP 1 008 014 B1**
(45) Veröffentlichungstag und Bekanntmachung des Hinweises auf die Patenterteilung: **05.09.2001**
(21) Anmeldenummer: 97935486.7
(22) Anmeldetag: 22.07.1997
(51) Int. Cl.: G03B 3/04

(54) **VORRICHTUNG ZUM FOKUSSIEREN EINES FILMBILDES**
DEVICE FOR FOCUSING A FILM FRAME
DISPOSITIF POUR LA MISE AU POINT D'UNE IMAGE DE FILM

(30) Priorität: 26.07.1996 DE 19631553
(43) Veröffentlichungstag der Anmeldung: 14.06.2000
(73) Patentinhaber: ARNOLD & RICHTER CINE TECHNIK GMBH & CO. BETRIEBS KG, 80799 München (DE)
(72) Erfinder: WALLNER, Kurt, D-85386 Eching (DE); TRAUNINGER, Walter, A-2381 Laab im Walde (AT)
(74) Vertreter: Ninnemann, Detlef, Dipl.-Ing.
(86) Internationale Anmeldenummer: DE9701578
(87) Internationale Veröffentlichungsnummer: WO9804955

(56) Entgegenhaltungen:
- DE-A- 3 424 014
- US-A- 3 250 197
- US-A- 3 584 559
- US-A- 4 437 552

## Beschreibung

Die Erfindung betrifft eine Vorrichtung zum Fokussieren eines Filmbildes nach dem Oberbegriff des Anspruchs 1.

Zur Einstellung der Irisblendenöffnung, der Bildschärfe und Brennweite eines Kameraobjektivs sind am Objektivgehäuse Objektivringe angeordnet. Durch Drehung der Objektivringe wird das Linsensystem über ein Getriebe linear verstellt und damit die Bildschärfe und Brennweite des Kameraobjektivs verändert. Die manuelle Einstellung der Irisblendenöffnung, des Fokus und der Brennweite (Zoom) des Kameraobjektivs an den dafür vorgesehenen objektivringen ist für den Kameramann insbesondere bei gleichzeitiger Bildbetrachtung durch das Sucherokular schwierig und eine reproduzierbare Einstellung bestimmter Brennweiten, Fokuswerte und Irisblendenöffnungen mit erheblichen Umständen verbunden und eine Vorprogrammierung vorbestimmbarer Werte nicht möglich.

Zur einfacheren und zuverlässigeren Einstellung der Objektivringe sind Antriebseinheiten bekannt, die an mit dem Kameragehäuse verbundenen Irisstangen befestigt sind und jeweils über ein Ritzel ein Drehmoment auf eine Außenverzahnung der Objektivringe übertragen und auf diese Weise eine Einstellung der Objektivringe bewirken. Mit diesen zusätzlichen Antriebseinheiten wird die Bedienung für den Kameramann wesentlich erleichtert und die Möglichkeit geschaffen, die Antriebseinheiten an eine Steuereinrichtung anzuschließen und voreingestellte oder vorprogrammierbare Werte für die Irisblendenöffnung, die Bildschärfe und Brennweite des Kameraobjektivs einzustellen.

Die Umsetzung der Drehbewegung der Objektivringe in die lineare Verstellung des Linsensystems des Kameraobjektivs erfordert jedoch ein gewisses Spiel, um eine leichte Einstellbarkeit zu ermöglichen. In gleicher Weise ist ein gewisses Spiel zwischen dem Ritzel der Antriebseinheit und der Außenverzahnung des Objektivringes unvermeidlich, was insbesondere bei der Fokussierung, bei der geringste Verstellungen des Kameraobjektivs zu Bildunschärfen führen können, problematisch ist. Weniger problematisch ist die Einstellung der Irisblendenöffnung und der Brennweite, da der Bildausschnitt und die Tiefenschärfe leicht korrigiert werden können und selbst geringfügig ungenaue Einstellungen nicht zur Unbrauchbarkeit der Aufnahmen führen.

In vielen Anwendungsfällen ist zudem die Verwendung eines optisch opcimierten Objektivs mit fester Brennweite möglich, bei dem nur die Einstellung der Irisblendenöffnung und der Bildschärfe erforderlich ist.

Aus der US-A-4,437,552 ist eine Laufbildkamera mit einer Blende, einem Filmtransportmechanismus und einer Fokussierungseinrichtung bekannt, die von einem gemeinsamen Antriebsmotor über eine Federkupplung angetrieben werden. Das Kameraobjektiv ist mit einer Verstelleinrichtung zum translatorischen Verstellen des Kameraobjektivs verbunden, die aus einer in festen Führungen gelagerten Verbindungsstange besteht, die mit einer Nockenscheibe verbunden ist. Die Nockenscheibe steuert die translatorische Bewegung des Kameraobjektivs und ist mit einem mit der Federkupplung verbundenen Schneckengetriebe verbunden. Die Verstelleinrichtung ist zusätzlich mit einer Einrichtung zum automatischen Fokussieren der Filmbilder verbunden.

Aus der US-A-3,250,197 ist eine Fokussierungseinrichtung für einen mit einem Bildträger verbundenen Bildwandler bekannt, die aus einer Einrichtung zum translatorischen Verstellen des Abstandes zwischen mit einer mit dem Bildwandler verbundenen Linsenanordnung und dem Bildträger besteht.

Aus der DE-A-342 40 14 ist eine Stehbildkamera bekannt, bei der zur Bildfokussierung nicht das Objektiv, sondern die Filmbühne mit dem Bildfenster translatorisch entlang der optischen Achse der Stehbildkamera verstellt wird. Die translatorische Verstellung erfolgt mit mehreren, zur optischen Achse parallelen Spindeln, die in Gewindebohrungen der Filmbühne eingreifen. Durch synchrones Drehen der Spindeln wird die Filmbühne in Richtung der optischen Achse translatorisch verschoben bis in Abhängigkeit von einer automatischen Entfernungsmeßeinrichtung ein elektromagnetisch betätigtes Sperrmittel in das Getriebe einfällt. Nach der Filmbelichtung und beim nächstfolgenden Filmtransport wird das Getriebe mit der Filmbühne in die Ausgangslage zurückgesetzt.

Aufgabe der vorliegenden Erfindung ist es, eine präzise und für eine automatische Bildschärfeneinstellung verwendbare Fokussierungseinrichtung ohne Objektivring oder eine am Kameraobjektiv anzubringende Antriebseinheit zu schaffen und diese mit einer Einrichtung zur Dämmung oder Isolierung der vom Kameramechanismus einer Laufbildkamera ausgehenden Geräusche zu verbinden.

Diese Aufgabe wird erfindungsgemäß durch die Merkmale des Anspruchs 1 gelöst.

Die erfindungsgemäße Lösung schafft zum einen eine Vorrichtung zum Fokussieren eines Filmbildes in einer Laufbildkamera, die eine präzise Einstellung der Bildschärfe ermöglicht und sich insbesondere für eine automatische Fokussierung sowie eine Einbindung der Bildschärfeneinstellung in den Automatikbetrieb einer Laufbildkamera eignet und zum anderen eine hohe Geräuschdämmung oder Geräuschisolierung der vom Kameramechanismus ausgehenden Geräusche bei einer Laufbildkamera, die aus einem äußeren Kameragehäuse und einer Innenkamera besteht, die über steuerbare Verbindungselemente miteinander verbunden sind.

Dabei werden die zur Geräuschminderung oder Geräuschisolierung zwischen dem Bildfenster und dem Objektivträger angeordneten geräuschisolierenden Verbindungselemente zusätzlich zur Fokussierungseinstellung verwendet, so daß keine zusätzliche baulichen Maßnahmen im Kameragehäuse der Laufbildkamera erforderlich sind, da die entsprechende Ansteuerung der Verbindungselemente in die Steuer- und Regelelektronik der Laufbildkamera integriert wird.

In besonderer Weise eignet sich die erfindungsgemäße Lösung für die Verwendung eines Kameraobjektivs mit fester Linsenanordnung, das heißt für ein Kameraobjektiv vorgegebener Brennweite, bei dem insbesondere auch eine Einstellung der Irisblendenöffnung außerhalb des Kameraobjektivs vorgenommen werden kann bzw. eine Irisblende nicht vorgesehen ist.

Vorzugsweise enthält die Verstelleinrichtung eine parallel zur optischen Achse der Laufbildkamera verlaufende Führungseinrichtung, die aus einer Führungsschiene und einem mit der Verstelleinrichtung verbundenen Führungsschlitten besteht.

Die Verstelleinrichtung besteht vorzugsweise aus einem elektromagnetischen, elektrostriktiven, magnetostriktiven oder piezoelektrischen Wandler, dessen Länge mittels einer Ansteuerschaltung veränderbar ist.

Die Änderung des Abstandes zwischen der Objektivebene und der Bildebene kann wahlweise von einer Einrichtung zum translatorischen Verstellen des Objektivträgers und/oder Kameraobjektivs entlang der optischen Achse der Laufbildkamera oder durch eine Einrichtung zum translatorischen Verstellen des Bildfensters entlang der optischen Achse der Laufbildkamera vorgenommen werden.

Die translatorische Verstellung des Kameraobjektivs entlang der optischen Achse der Laufbildkamera eignet sich insbesondere für eine Integration der Verstelleinrichtung in das Kameragehäuse und damit insbesondere für eine Verwendung in neuen Laufbildkameras.

Zur translatorischen Verstellung des Objektivträgers entlang der optischen Achse der Laufbildkamera kann vorzugsweise zwischen dem Kameraobjektiv und dem Objektivträger ein Adapter angeordnet werden, der eine Anordnung zur translatorischen Verstellung des Abstandes zwischen der Objektivbefestigung und der Verbindung mit dem Objektivträger aufweist. Diese Anordnung eignet sich insbesondere zum Nachrüsten bestehender Laufbildkameras mit fester Verbindung des Objektivträgers am Kameragehäuse der Laufbildkamera.

Eine translatorische Verstellung des Bildfensters ermöglicht eine Verlagerung der Bildebene zum Einstellen der Bildschärfe ohne interne oder externe Verstellung des Kameraobjektivs. Dadurch ist insbesondere die Verwendung eines Kameraobjektives fester Brennweite mit optimaler Abstimmung des Linsensystems möglich, so daß keine optischen Verluste durch die Verstellung oder Verstellbarkeit des Kameraobjektives auftreten.

Auch der Einsatz vorhandener, mit einem Objektivring zur Einstellung der Bildschärfe versehener Objektive ist unter Ausnutzung der erfindungsgemäßen Vorteile möglich, indem beispielsweise ein fester Fokuswert eingestellt und diese Einstellung fixiert wird.

Anhand von in der Zeichnung dargestellten Ausführungsbeispielen soll der der Erfindung zugrundeliegende Gedanken näher erläutert werden. Es zeigen:
- Figur 1 -: eine Seitenansicht einer Laufbildkamera;
- Figur 2 -: einen Längsschnitt durch den vorderen Teil des Kameragehäuses;
- Figur 3 -: einen schematischen Schnitt durch eine Laufbildkamera mit einer Einrichtung zum translatorischen Verstellen des Objektivträgers;
- Figur 4 -: einen schematischen Schnitt durch eine Laufbildkamera mit einem translatorisch verstellbaren Adapter zwischen dem Objektiv und dem Objektivträger;
- Figur 5 -: einen schematischen Schnitt durch eine Laufbildkamera mit einer Einrichtung zum translatorischen Verstellen des Bildfensters bzw. einer Innenkamera;
- Figur 6 -: einen schematischen Schnitt durch eine Laufbildkamera mit zwischen dem Kameragehäuse und einer Innenkamera angeordneten Verstellelementen zum translatorischen Verstellen der Bildebene und zur Geräuschdämmung;
- Figur 7 -: ein Blockschaltbild für eine Verstelleinrichtung und
- Figur 8 -: ein Blockschaltbild für eine Verstelleinrichtung mit aktiven geräuschisolierenden Verbindungselementen.

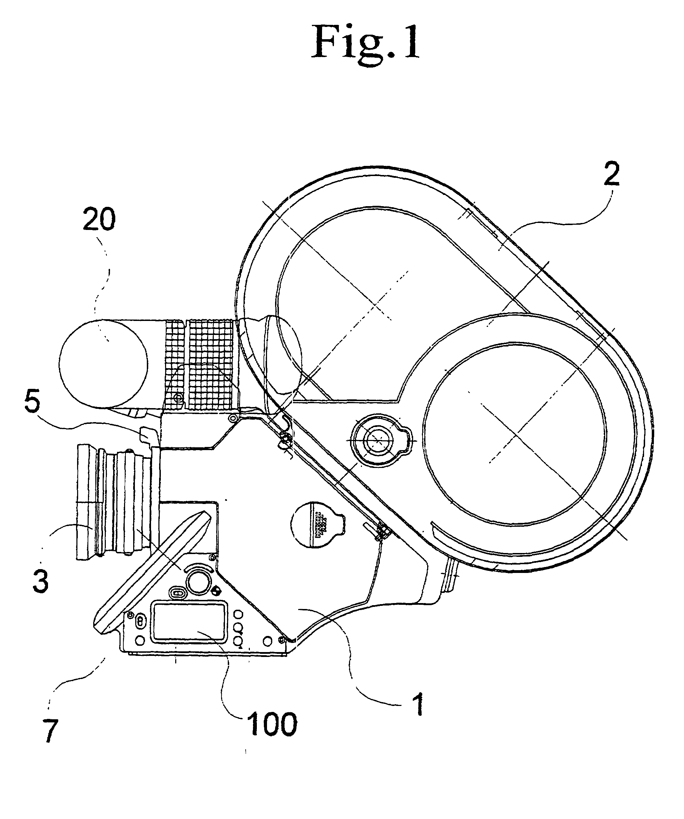

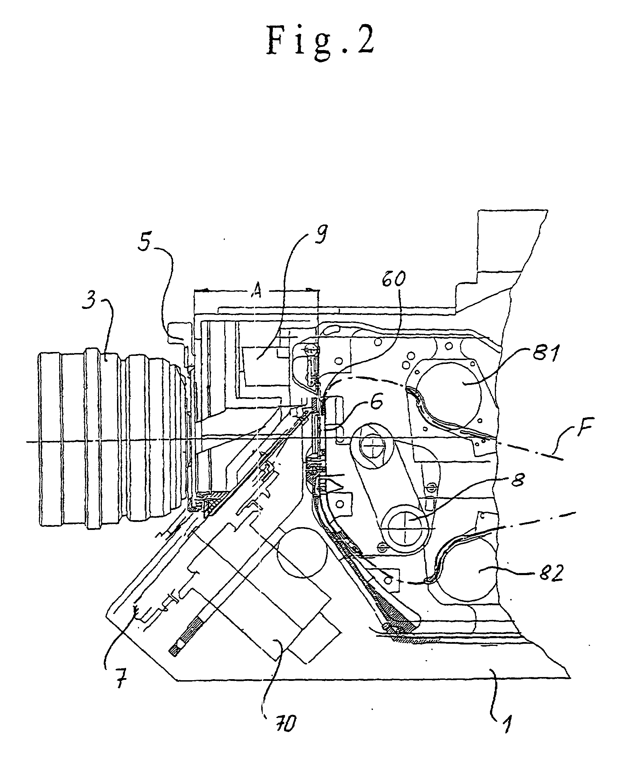

Die in Figur 1 in einer Seitenansicht und in Figur 2 mit einem teilweise geschnittenen Kameragehäuse dargestellte Laufbildkamera weist ein Kameragehäuse 1 mit einer daran angelenkten Kamerakassette 2 auf, in der eine Filmabwickelspule und eine Filmaufwickelspule angeordnet sind. Am Kameragehäuse 1 ist ein Tastenfeld 100 zum Einstellen der Kamerafunktionen und Einstellen sowie Auslösen vorprogrammierbarer Parameter und ein Objektivträger 5 zur Festlegung von Wechselobjektiven an der Laufbildkamera ausgebildet. In der optischen Achse des Objektivs 3 ist ein Bildfenster 6 im Kameragehäuse 1 angeordnet, an dem der Laufbildfilm F über eine Filmbühne 60 intermitierend vorbeibewegt wird. Eine von einem Blendenmotor 70 angetriebene Spiegelblende 7 gibt den durch das Objektiv 3 einfallenden Strahlengang zur Belichtung eines im Bildfenster 6 stehenden Filmbildes des Laufbildfilmes F frei bzw. reflektiert den Strahlengang während des Filmtransports in ein Sucherokular 4 bzw. zu anderen an die Laufbildkamera angeschlossenen Bildbetrachtungs- oder -verarbeitungseinrichtungen.

Die Filmtransporteinrichtung enthält ein Motor-Getriebe-Aggregat 8 für das Greiferschaltwerk der Laufbildkamera sowie für Zahnrollen 81, 82 zum Abzug und Rücktransport des Laufbildfilms F aus der bzw. in die Filmkassette 2.

Das Auflagemaß A, das heißt der Abstand zwischen der Ebene des Objektivträgers oder Kameramounts 5 und der Bildebene des Bildfensters 6 stellt: üblicherweise eine konstante Größe dar, da das Objektiv 3 so justiert wird, daß der Brennpunkt des durch das Objektiv 3 fallenden Strahlengangs in der Bildebene liegt, das heißt in das Bildfenster 6 fällt. Zur Einstellung der Bildschärfe in Abhängigkeit von der Entfernung des aufzunehmenden Objekts von der Laufbildkamera wird ein am Objektiv 3 angebrachter Objektivring verdreht, der über einen Getriebemechanismus zum Verstellen des Linsensystems führt, so daß in Folge davon die Brennpunktebene in die Bildebene, das heißt in die Ebene des Bildfensters 6, verlegt wird.

Anstelle einer Verstellung des Linsensystems im Kameraobjektiv 3 wird erfindungsgemäß zur Bildschärfeneinstellung der Abstand zwischen dem Objektivfassungsteil, das heißt dem der Laufbildkamera zugewandten Ende des Objektivs und dem Bildfenster 6, in dem der Laufbildfilm F intermittierend vorbeibewegt wird, mittels einer Verstelleinrichtung 9 verändert. Dabei bleibt die Einstellung und Lage des Objektivs 3 unverändert, soweit dies die Einstellung der Bildschärfe betrifft, das heißt es kann beispielsweise ein Objektiv mit fester Brennweite verwendet werden. Zusätzliche Einstellmöglichkeiten am Objektiv zur Brennweiten- oder Irisblendenverstellung bleiben hiervon unbeeinflußt.

Die Veränderung des Abstandes zwischen der kameraseitigen Objektivbefestigung und dem Bildfenster 6 bedeutet in den meisten Anwendungsfällen eine Veränderung des Auflagemaßes A zwischen dem Objektivträger 5 und dem Bildfenster 6, kann jedoch bei Verwendung eines Objektivadapters auch eine Veränderung des Abstandes zwischen dem Objektivfassungsteil des Objektivadapters und dem Bildfenster 6 bedeuten.

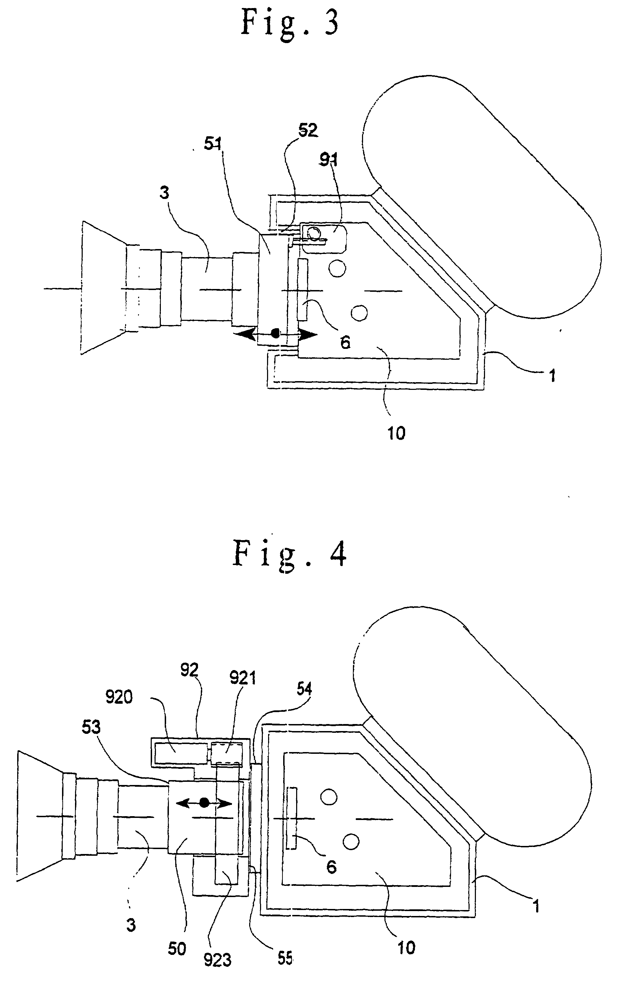

Verschiedene Ausführungsbeispiele zur Veränderung des Abstandes zwischen der Objektivebene und der Bildebene mittels einer translatorischen Verstelleinrichtung sind in den nachfolgend beschriebenen Figuren 3 bis 6 dargestellt.

Figur 3 zeigt einen schematischen Schnitt durch eine Laufbildkamera mit einem Kameragehäuse 1 mit einem Bildfenster 6, das auf einer fest mit dem Kameragehäuse 1 verbundenen Platine 10 oder in einer Innenkamera angeordnet ist. Das Kameraobjektiv 3 ist mit einem Objektivträger 51 verbunden, der in einer Objektivträgerführung 52 des Kameragehäuses 1 präzise gelagert ist. Innerhalb dieser Objektivträgerführung 52 ist der Objektivträger 51 in Richtung der eingetragenen Pfeile mittels einer Verstelleinrichtung 91 translatorisch verstellbar, so daß die Objektivebene zum Bildfenster 6 hinbewegt oder vom Bildfenster 6 wegbewegt wird. Mittels dieser translatorischen Verstellung des Objektivs 3 wird der durch das Objektiv 3 gelangende Strahlengang auf die Bildebene des Bildfensters 6 fokussiert, ohne daß eine Bildschärfeneinstellung am Objektiv 3 selbst erforderlich ist.

Figur 4 zeigt eine Variante der translatorischen Bildschärfeneinstellung an einem schematischen Schnitt durch eine Laufbildkamera mit einem Kameragehäuse 1, in dem eine Innenkamera oder eine Kameraplatine 10 mit darin bzw. darauf befestigtem Bildfenster 6 angeordnet ist. Anstelle eines Objektivträgers ist in dieser Ausführungsform ein Flansch 54 am Kameragehäusse 1 zur Aufnahme eines Objektivadapters 50 vorgesehen, der ein Objektivfassungsteil 53 aufweist, an dem das Kameraobjektiv 3 beispielsweise mittels eines Bajonettverschlusses befestigt ist, und ein mit dem Flansch 54 verbindbares Kamerabefestigungsteil 55 aufweist. Der Objektivadapter 50 enthält eine Verstelleinrichtung 92 mit einem Verstellmotor 920, beispielsweise einem Ultraschallmotor, einem mit dem Verstellmotor 920 verbundenen Ritzel 921 und einem mit dem Ritzel 921 kämmenden Schneckenrad 923, das eine Innenschnecke zum Verstellen der Länge des Objektivadapters 50 in Richtung der in Figur 4 eingetragenen Pfeile aufweist.

Anstelle der in Figur 4 schematisch dargestellten Verstelleinrichtung 92 kann jede andere geeignete Verstelleinrichtung zum translatorischen Verstellen des Kameraobjektivs 3 vorgesehen werden, wenn diese die Anforderungen an eine hinreichende Präzision und Schnelligkeit der Verstellbewegung aufweist.

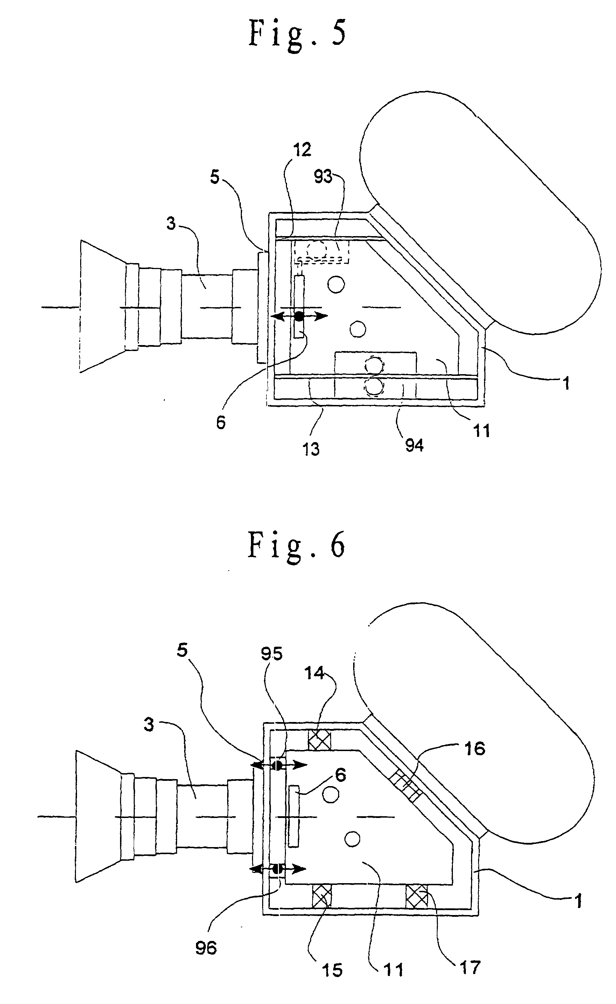

Eine weitere Variante zum Verändern des Abstandes zwischen der Objektivebene und der Bildebene ist in Figur 5 schematisch dargestellt, die ein Kameragehäuse 1 mit darin angeordneter Innenkamera 11 zeigt, in der ein Bildfenster 6 befestigt ist. Das Objektiv 3 ist in dieser Ausführungsform fest über den Objektivträger bzw. Kameramount 5 mit dem Kameragehäuse 1 verbunden, während das Bildfenster 6 mittels einer Einrichtung 93 translatorisch in Richtung der eingetragenen Pfeile verstellbar ist, wodurch das Auflagemaß zur Bildschärfeneinstellung verändert wird.

Alternativ zu einer geeigneten translatorischen Verstellung des Bildfensters 6 ist eine Verstellung der Innenkamera 11 gegenüber dem Kameragehäuse 1 bei fest mit der Innenkamera 11 verbundenem Bildfenster 6 möglich. In dieser Ausführungsform wird die Innenkamera 11 in einer Führungsschlitten-Führungsschienen-Kombination 12, 13 geführt und mittels einer Verstelleinrichtung 94 gegenüber dem Kameragehäuse 1 translatorisch in Richtung der in Figur 5 eingetragenen Pfeile verstellt. Selbstverständlich muß die Führung der Innenkamera 11 mittels der Führungsschlitten-Führungsschienen-Kombination 12, 13 so präzise sein, daß sowohl ein exakter Bildstand als auch eine exakte Führung des Bildfensters 6 gewährleistet sind.

Eine translatorische Verstellung des Bildfensters 6 bzw. der Innenkamera 11 zur Bildschärfeneinstellung läßt sich besonders vorteilhaft mit geräuschdämmenden Maßnahmen zur Verhinderung von Körperschallübertragungen von der Innenkamera 11 mit dem darin angeordneten, geräuscherzeugenden Filmtransportmechanismus zum Kameragehäuse 1 kombinieren. Eine derartige Kombination von geräuschdämmenden Verbindungselementen zwischen der Innenkamera 11 und dem Kameragehäuse 1 mit einer translatorischen Verstelleinrichtung zur Bildschärfeneinstellung ist in Figur 6 dargestellt.

Figur 6 zeigt einen schematischen Schnitt durch eine Laufbildkamera mit einem Kameragehäuse 1, einem am Kameragehäuse 1 über einen Objektivträger 5 mit dem Kameragehäuse 1 verbundenen Objektiv 3 und einer im Kameragehäuse 1 angeordneten Innenkamera oder einem Kameraskelett 11, in dem der Filmtransportmechanismus und das Bildfenster 6 angeordnet sind. Die Innenkamera ist über passive geräuschisolierende Verbindungselemente 14, 15, 16, 17 gegenüber dem Kameragehäuse 1 abgestützt. Zur Veränderung des Auflagemaßes zwischen der Objektivebene und der Bildebene sowie zur zusätzlichen Geräusch- und Schwingungsisolation zwischen der Innenkamera und dem Kameragehäuse bei konstantem, von der Bildschärfeneinstellung abhängigem Auflagemaß zwischen der Objektivebene und der Bildebene sind aktive Verbindungselemente 95, 96 zwischen dem Kameragehäuse 1 und der Innenkamera 11 parallel zur optischen Achse der Laufbildkamera vorgesehen.

Die aktiven Verbindungselemente 95, 96 bewirken zum einen eine Veränderung des Abstandes zwischen der Objektivebene und der Bildebene in Abhängigkeit von der Fokussierung des durch das Objektiv 3 gelangenden Strahlenganges auf die Bildebene im Bildfenster 6 sowie zum anderen eine Geräuschminderung bzw. Geräuschisolation durch Veränderung ihrer wirksamen Eigensteifigkeit. Hierzu sind die Verbindungselemente 95, 96 so gestaltet, daß sie gegenüber der höherfrequenten, auf den Transportmechanismus in der Innenkamera 11 zurückzuführenden Kraft, die periodisch mit der Betriebs- oder Bildfrequenz oder einem Vielfachen dieser Frequenz auftritt, wie eine sehr weiche Feder wirken, während sie gegenüber den niederfrequenten Trägheits- und Schwerkräften beispielsweise bei einem Kameraschwenk oder einer Neigung der Laufbildkamera wie eine sehr steife Feder wirken.

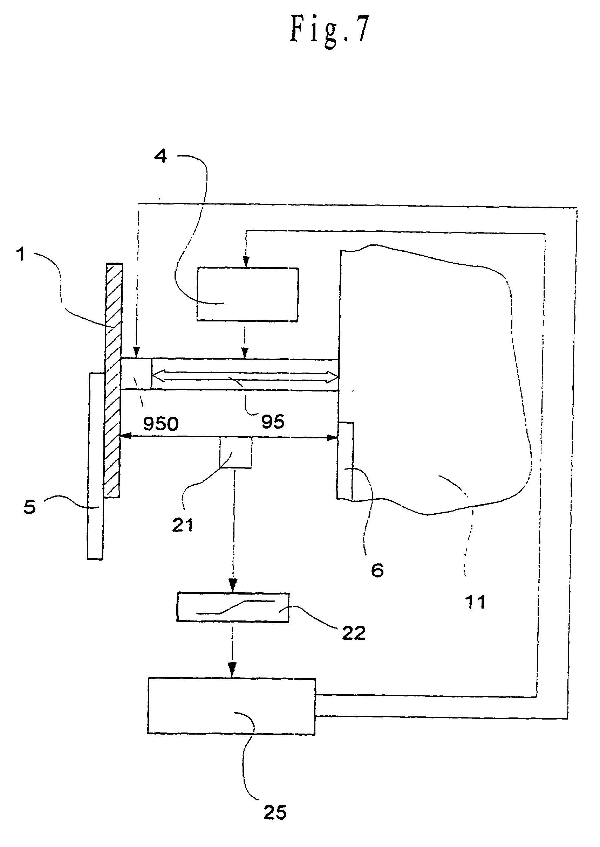

Die Verbindungselemente 95, 96 weisen daher eine ausreichend hohe Eigensteifigkeit auf, so daß die Trägheits- und Schwerkräfte eine nur vernachlässigbar kleine Relativbewegung zwischen der Innenkamera 11 und dem Kameragehäuse 1 verursachen. Der Aufbau und die Funktion der Verbindungselemente 95, 96 ist schematisch in Figur 7 dargestellt.

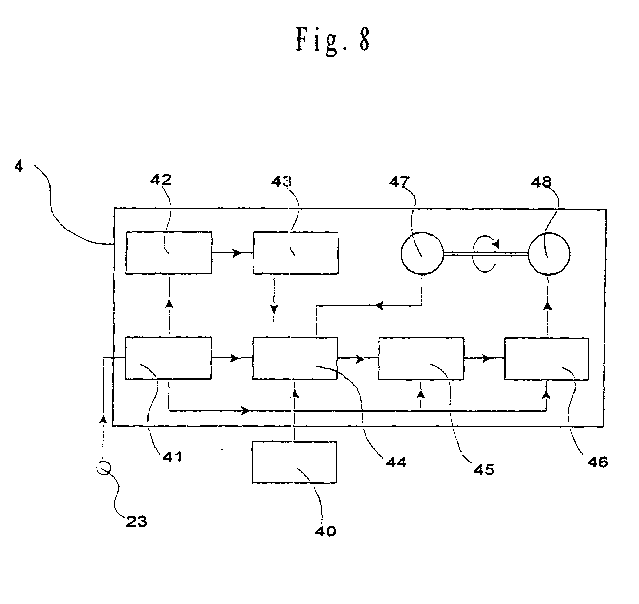

Figur 7 zeigt einen schematischen Ausschnitt der Frontseite des Kameragehäuses 1 im Bereich des mit dem Kameragehäuse 1 verbundenen Objektivträgers 5. Zwischen der Frontseite des Kameragehäuses 1 und der Innenkamera 11 mit darin befestigtem Bildfenster 6 ist das Verbindungselement 95 angeordnet, dessen Länge zur Veränderung des Abstandes zwischen der Objektivebene und der Bildebene, das heißt des Abstandes zwischen dem Kameragehäuse 1 und der Innenkamera 11 veränderbar ist. Die Ansteuerung des Verstellelementes 95 erfolgt über eine Fokussierungseinrichtung 4, deren Aufbau und Funktion am Beispiel der in Figur 8 dargestellten Anordnung beschrieben wird.

Mit dem Verstellelement 95 verbunden ist ein dynamisch ansteuerbares, geräuschisolierendes Verbindungselement 950, das aus einem elektromagnetischen, elektrostriktiven, magnetischstriktiven, piezoelektrischen oder in sonstiger Weise durch Einwirkung eines Ansteuersignals in seinen Abmessungen veränderbares Wandlerelement besteht, das wahlweise parallel zu einem Federelement mit vorgegebener Steifigkeit bzw. Federkonstante geschaltet werden kann. Dabei ist die Federkonstante des parallel geschalteten Federelementes so groß, daß die Trägheitskraft und die Schwerkraft nur sehr kleine Längenänderungen verursachen, die zu keiner Beeinträchtigung des Auflagemaßes und damit der Abbildungsleistung der Laufbildkamera führt.

Alternativ hierzu kann das dynamisch ansteuerbare, geräuschisolierende Verbindungselement 950 aus einem elektromagnetischen, elektrostriktiven, magnetostriktiven oder piezoelektrischen Wandler mit genügend hoher Eigensteifigkeit bzw. Federkonstante C bestehen. Durch dynamische Ansteuerung des Wandlerelementes wird dessen Länge und damit die Gesamtlänge des dynamisch ansteuerbaren, geräuschisolierenden Verbindungselementes 950 verändert, ohne daß ein zusätzliches, parallel zum Wandlerelement geschaltetes Federelement erforderlich ist.

Zur Erfassung des Abstandes zwischen der Objektivebene und der Bildebene ist ein Längenmeßsensor 21 vorgesehen, dessen längenproportionales Sensor-Ausgangssignal über ein Filterelement 22 an eine Steuer- und Regelungseinrichtung 25 abgegeben wird. Das längenproportionale Sensor-Ausgangssignal des Längenmeßsensors 21 setzt sich aus einer Fokussierungskomponente und einem zeitabhängigen Sensorsignal zur Erfassung der zwischen dem Kameragehäuse 1 und der Innenkamera 11 wirkenden Kräfte zusammen. Die von der Steuer- und Regeleinrichtung 25, vorzugsweise einem Mikroprozessor, abgegebenen Steuersignale werden zum einen unmittelbar als elektrisches Steuersignal dem dynamisch ansteuerbaren, geräuschisolierenden Verbindungselement 950 und zum anderen der Fokussierungseinrichtung 4 zugeführt, die beispielsweise mittels einer motorisch betriebenen Verstelleinrichtung die Länge des Verstellelementes 95 zur Bildschärfeneinstellung verändert.

Figur 8 zeigt ein Blockschaltbild einer Fokussierungseinrichtung 4, die in jedem der vorstehend beschriebenen Ausführungsbeispiele zur Fokussierungseinstellung eingesetzt werden kann. Die Fokussierungseinrichtung 4 enthält einen mit einer Gleichspannungsquelle 23 verbundenen Gleichspannungswandler 41, der die für den Betrieb notwendigen Teilspannungen liefert. Um einen gleichmäßigen Fahreffekt bei der Fokussierung zu erzielen, kann die Fokussierungseinrichtung mit einem elektronischen Stabilisierungs- und Regelsystem ausgerüstet werden, wobei durch eine elektronische Gegenspannungsbremse das mechanische Trägheitsmoment ausgeschaltet wird, so daß beim Loslassen beispielsweise eines Daumendrehgriffes oder einer Taste zur Bildschärfeneinstellung die von der Fokussierungseinrichtung angesteuerte Verstelleinrichtung ohne Nachlauf sofort stoppt.

Das Stabilisierungs- und Regelungssystem besteht aus einem Geschwindigkeitsgeber 42 und einer Empfindlichkeitseinstellung 43, deren Ausgangssignal einem Steuerverstärker 44 zugeführt wird. Der Steuerverstärker 44 steuert eine Treiberstufe 45 an, deren Ausgangssignal über eine Endstufe 46 an einen Verstellmotor 48 abgegeben wird. Der Verstellmotor 48 ist mechanisch mit einem Tachogenerator gekoppelt, dessen Ausgangsspannungssignal an den Steuerverstärker 44 zurückgekoppelt wird. Der Gleichspannungswandler 41 versorgt sowohl den Geschwindigkeitsgeber 42 als auch die Treiberstufe 45 und die Endstufe 46.

Zusätzlich ist der Steuerverstärker 44 mit dem Ausgang eines Stellgliedes 40 verbunden, beispielsweise einer Einstelltaste zur Fokussierung. Alternativ kann anstelle des Stellgliedes 40 die Steuer- und Regeleinrichtung 25 gemäß Figur 7 eingesetzt werden, wobei die Steuer- und Regeleinrichtung 25 mit einem entsprechenden Eingabefeld, wie dem in Figur 1 dargestellten Tastenfeld 100 zum Einstellen verschiedener Kamerafunktionen bzw. Auslösen voreingestellter bzw. vorprogrammierter Kamerafunktionen versehen ist.

Die vorstehend beschriebenen Ausführungsbeispiele können in vielfacher Weise verändert und erweitert werden. So kann beispielsweise anstelle der motorisch angetriebenen Verstelleinrichtungen, vorzugsweise unter Verwendung eines Ultraschallmotors, eine elektromagnetische, elektrostriktive, magnetostriktive oder piezoelektrische Verstelleinrichtung vorgesehen werden, die unter der Einwirkung eines Ansteuersignals eine hinreichende Längenänderung durchführt, um im gewünschten Einstellungsbereich eine Fokussierung des durch das Objektiv gelangenden Strahlenganges zu bewirken.

Auch läßt sich die vorstehend beschriebene Vorrichtung zur Einstellung der Bildschärfe für eine adäquate Brennweiteneinstellung in einem ein- oder mehrteiligen Objektiv verwenden.

Die Erfindung eignet sich insbesondere zum Einsatz in Einrichtungen zur automatischen Fokussierung (Autofokus), indem die Ansteuereinrichtung für die Verstelleinrichtungen und -elemente oder die übergeordnete Steuer- und Regeleinrichtung mit einer Autofokus-Einrichtung verbunden wird. Vorteilhafterweise wird eine solche automatische Fokussierung mit einer manuellen Fokussierung verknüpft, die alternativ anwendbar ist oder nach Voreinstellung durch die Einrichtung zur automatischen Fokussierung zur Feineinstellung verwendet wird.

## Patentansprüche

1. Vorrichtung zum Fokussieren eines Filmbildes in einer Laufbildkamera mit einem Kameragehäuse (1), das einen Objektivträger (5) zur Aufnahme eines in der optischen Achse der Laufbildkamera angeordneten Kameraobjektivs (3) aufweist, dessen kameraseitiges Ende eine Objektivebene ausbildet, und mit einer Innenkamera (10, 11), auf der ein Filmtransportmechanismus angeordnet ist, der den Film an einem mit der Innenkamera (10, 11) verbundenen Bildfenster (6) entlangbewegt,
**gekennzeichnet durch**
eine Einrichtung (14 bis 17) zur geräuschisolierenden Verbindung der Innenkamera (10, 11) mit dem Kameragehäuse (1), die eine Verstelleinrichtung (9; 92 bis 96; 950) mit vorgegebener Eigensteifigkeit zum translatorischen Verstellen der Innenkamera (10, 11) aufweist.

2. Vorrichtung nach Anspruch 1, **dadurch gekennzeichnet,** daß die Verstelleinrichtung (9; 92 bis 96, 950) mit einer parallel zur optischen Achse der Laufbildkamera verlaufenden Führungseinrichtung (12, 13) verbunden ist.

3. Vorrichtung nach Anspruch 2, **dadurch gekennzeichnet,** daß die Führungseinrichtung (12, 13) aus mindestens einer Führungsschiene (12) und einem mit der Verstelleinrichtung (9; 92 bis 96; 950) verbundenen Führungsschlitten (13) besteht.

4. Vorrichtung nach Anspruche 2 oder 3, **dadurch gekennzeichnet,** daß die Verstelleinrichtung (9; 92 bis 96; 950) einen elektromagnetischen, elektrostriktiven, magnetostriktiven oder piezoelektrischen Wandler (950) enthält, dessen Länge mittels einer Ansteuerschaltung (4; 40) veränderbar ist.

5. Vorrichtung nach mindestens einem der vorangehenden Ansprüche, **dadurch gekennzeichnet,** daß die Verstelleinrichtung (9) den Objektivträger (5) oder das Kameraobjektiv (3) entlang der optischen Achse der Laufbildkamera translatorisch verstellt.

6. Vorrichtung nach Anspruch 5, **dadurch gekennzeichnet, daß** zwischen dem Kameraobjektiv (3) und dem Objektivträger (5) ein Adapter (50) angeordnet ist, der die Verstelleinrichtung (92) zum translatorischen Verstellen des Abstandes zwischen der Objektivbefestigung (53) und einer kameraseitigen Befestigung (55) aufweist.

7. Vorrichtung nach mindestens einem der vorangehenden Ansprüche, **dadurch gekennzeichnet,** daß die Verstelleinrichtung (9; 92 bis 96; 950) mit einer Einrichtung (4) zum automatischen Fokussieren eines Filmbildes verbunden ist.

## Claims

1. Device for focusing a film image in a movie film camera with a camera housing (1) which has a lens carrier (5) for holding a camera lens (3) mounted in the optical axis of the movie film camera and whose end on the camera side forms a lens plane, and with an inner camera (camera plate, camera skeleton) (10,11) on which a film transport mechanism is mounted which moves the film along past a film window (6) which is connected to the inner camera (10,11)
**characterised by**
a device (14 to 17) for the noise-insulating connection of the inner camera (10,11) with the camera housing (1) which has a displacement device (9; 92 to 96; 950) with predetermined inherent stiffness for the translatory displacement of the inner camera (10,11).

2. Device according to claim 1 **characterised in that** the displacement device (9; 92 to 96, 950) is connected to a guide device (12, 13) running parallel to the optical axis of the movie film camera.

3. Device according to claim 2 **characterised in that** the guide device (12, 13) consists of at least one guide rail (12) and a guide slide (13) connected to the displacement device (9; 92 to 96; 950).

4. Device according to claim 2 or 3 **characterised in that** the displacement device (9; 92 to 96; 950) contains an electromagnet, electrostrictive, magnetostrictive or piezoelectric converter (950) whose length can be changed by means of a control switch (4; 40).

5. Device according to at least one of the preceding claims **characterised in that** the displacement device (9) moves the lens carrier (5) or camera lens (3) in translation along the optical axis of the movie film camera.

6. Device according to claim 5 **characterised in that** between the camera lens (3) and lens carrier (5) is an adapter (50) which has a device (92) for the translatory displacement of the distance between the lens fastener (53) and a fastener (55) on the camera side.

7. Device according to at least one of the preceding claims **characterised in that** the displacement device (9; 92 to 96; 950) is connected to a device (4) for automatically focusing a film picture.

## Revendications

1. Dispositif pour la mise au point d'une image de film dans une caméra comportant un boîtier de caméra (1), qui comporte un porte-objectif (5) pour loger un objectif (3) de la caméra, disposé sur l'axe optique de la caméra et dont l'extrémité, côté caméra, forme un plan d'objectif, et comportant une caméra intérieure (10,11), sur laquelle est disposé un mécanisme de transport du film, qui déplace le film devant une fenêtre (6) de passage d'images reliée à la caméra intérieure (10,11),
caractérisé par
un dispositif (14 à 17) pour relier, d'une manière isolée vis-à-vis du bruit, la caméra intérieure (10,11) au boîtier (1) de la caméra, qui possède un dispositif de réglage (9; 92 à 96; 950) ayant une rigidité prédéterminée pour déplacer en translation la caméra intérieure (10,11).

2. Dispositif selon la revendication 1, **caractérisé en ce que** le dispositif de réglage (9;92 à 96; 950) est relié à un dispositif de guidage (12,13), qui s'étend parallèlement à l'axe optique de la caméra.

3. Dispositif selon la revendication 2, **caractérisé en ce que** le dispositif de guidage (12,13) est constitué par au moins un rail de guidage (12) et par un chariot de guidage (13), qui est relié au dispositif de réglage (9;92 à 96;950).

4. Dispositif selon la revendication 2 ou 3,
**caractérisé en ce que** le dispositif de réglage (9;92 à 96; 950) contient un convertisseur électromagnétique, électrostrictif, magnétostrictif ou piézoélectrique (905), dont la longueur peut être modifiée à l'aide d'un circuit de commande (4;40).

5. Dispositif selon au moins l'une des revendications précédentes, **caractérisé en ce qu**'un dispositif de réglage (9) déplace le porte-objectif (5) ou l'objectif (3) de la caméra le long de l'axe optique de la caméra.

6. Dispositif selon la revendication 5, **caractérisé en ce qu'**entre l'objectif (3) de la caméra et le porte-objectif (5) est disposé un adaptateur (50), qui comporte le dispositif de réglage (92) pour régler par translation la distance entre le dispositif de fixation d'objectif (53) et un dispositif de fixation (55) situé côté caméra.

7. Dispositif selon au moins l'une des revendications précédentes, **caractérisé en ce que** le dispositif de réglage (9;92 à 96;950) est relié à un dispositif (4) pour réaliser la focalisation automatique d'une image de film.
